# FASCICULE DE BREVET EUROPEEN

(11) **EP 1 819 533 B1**
(45) Date de publication et mention de la délivrance du brevet: **09.04.2008**
(21) Numéro de dépôt: 05817511.8
(22) Date de dépôt: 02.12.2005
(51) Int. Cl.: B60C 23/04

(54) **PNEUMATIQUE POUR VEHICULE ET UTILISATION D'UN SYSTEME DE MESURE DE LA TEMPERATURE**
FAHRZEUGREIFEN UND VERWENDUNG EINES TEMPERATURMESSSYSTEMS
VEHICLE TIRE AND THE USE OF A TEMPERATURE MEASURING SYSTEM

(30) Priorité: 02.12.2004 FR 0412827
(43) Date de publication de la demande: 22.08.2007
(73) Titulaire: Société de Technologie Michelin, 63000 Clermont-Ferrand (FR); Michelin Recherche et Technique S.A., 1763 Granges-Paccot (CH)
(72) Inventeur: FAGOT-REVURAT, Lionel, F-63260 USSEL DE VENSAT (FR); PROST, Pascal, F-63200 RIOM (FR)
(74) Mandataire: Le Cam, Stéphane Georges Elie
(86) Numéro de dépôt international: PCT/EP2005/056413
(87) Numéro de publication internationale: WO 2006/058918

(56) Documents cités:
- EP-A- 1 275 949
- US-A1- 2002 121 132

## Description

La présente invention concerne un pneumatique pour véhicule constitué pour parties de masses caoutchouteuses. L'invention concerne encore l'utilisation d'un système de mesure de la température sans fil dans un pneumatique pour véhicule.

L'invention se rapporte à des pneumatiques pour tout type de véhicule, tel que automobile, motocyclette, poids-lourds, engin agricole ou de génie civil.

Bien que non limité à une telle application, l'invention sera plus particulièrement décrite en référence à un pneumatique pour motocyclette.

L'armature de renforcement ou renforcement des pneumatiques et notamment des pneumatiques de motocyclette est à l'heure actuelle - et le plus souvent - constituée par empilage d'une ou plusieurs nappes désignées classiquement « nappes de carcasse », «nappes sommet », etc. Cette façon de désigner les armatures de renforcement provient du procédé de fabrication, consistant à réaliser une série de produits semi-finis en forme de nappes, pourvues de renforts filaires souvent longitudinaux, qui sont par la suite assemblées ou empilées afin de confectionner une ébauche de pneumatique. Les nappes sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Un tel type de procédé "classique" implique, en particulier pour la phase de fabrication de l'ébauche du pneumatique, l'utilisation d'un élément d'ancrage (généralement une tringle), utilisée pour réaliser l'ancrage ou le maintien de l'armature de carcasse dans la zone des bourrelets du pneumatique. Ainsi, pour ce type de procédé, on effectue un retournement d'une portion de toutes les nappes composant l'armature de carcasse (ou d'une partie seulement) autour d'une tringle disposée dans le bourrelet du pneumatique. On crée de la sorte un ancrage de l'armature de carcasse dans le bourrelet.

La généralisation dans l'industrie de ce type de procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les éléments de renforcement des différentes structures de renfort sont appliqués directement sur les couches adjacentes de mélanges caoutchouteux, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappes», ni de «tringle». Les produits de base, tels que les mélanges caoutchouteux et les éléments de renforcement sous forme de fils ou filaments, sont directement appliqués sur le noyau. Ce noyau étant de forme toroïdale, on n'a plus à former l'ébauche pour passer d'un profil plat à un profil sous forme de tore.

Par ailleurs, les pneumatiques décrits dans ce document ne disposent pas du "traditionnel" retournement de nappe carcasse autour d'une tringle. Ce type d'ancrage est remplacé par un agencement dans lequel on dispose de façon adjacente à ladite structure de renfort de flanc des fils circonférentiels, le tout étant noyé dans un mélange caoutchouteux d'ancrage ou de liaison.

Il existe également des procédés d'assemblage sur noyau toroïdal utilisant des produits semi-finis spécialement adaptés pour une pose rapide, efficace et simple sur un noyau central. Enfin, il est également possible d'utiliser un mixte comportant à la fois certains produits semi-finis pour réaliser certains aspects architecturaux (tels que des nappes, tringles, etc), tandis que d'autres sont réalisés à partir de l'application directe de mélanges et/ou d'élément de renforcement.

Dans le présent document, afin de tenir compte des évolutions technologiques récentes tant dans le domaine de la fabrication que pour la conception de produits, les termes classiques tels que «nappes», «tringles», etc, sont avantageusement remplacés par des termes neutres ou indépendants du type de procédé utilisé. Ainsi, le terme «renfort de type carcasse» ou «renfort de flanc» est valable pour désigner les éléments de renforcement d'une nappe carcasse dans le procédé classique, et les éléments de renforcement correspondants, en général appliqués au niveau des flancs, d'un pneumatique produit selon un procédé sans semi-finis. Le terme «zone d'ancrage», pour sa part, peut désigner tout autant le "traditionnel" retournement de nappe carcasse autour d'une tringle d'un procédé classique, que l'ensemble formé par les éléments de renforcement circonférentiels, le mélange caoutchouteux et les portions adjacentes de renfort de flanc d'une zone basse réalisée avec un procédé avec application sur un noyau toroïdal.

La direction longitudinale du pneumatique, ou direction circonférentielle, est la direction correspondant à la périphérie du pneumatique et définie par la direction de roulement du pneumatique.

Un plan circonférentiel ou plan circonférentiel de coupe est un plan perpendiculaire à l'axe de rotation du pneumatique. Le plan équatorial est le plan circonférentiel passant par le centre ou sommet de la bande de roulement.

La direction transversale ou axiale du pneumatique est parallèle à l'axe de rotation du pneumatique.

Un plan radial contient l'axe de rotation du pneumatique.

Comme dans le cas de tous les autres pneumatiques, on assiste à une radialisation des pneumatiques pour motos, l'architecture de tels pneumatiques comprenant une armature de carcasse formée d'une ou deux couches d'éléments de renforcement faisant avec la direction circonférentielle un angle pouvant être compris entre 65° et 90°, ladite armature de carcasse étant radialement surmontée d'une armature de sommet formée au moins d'éléments de renforcement généralement textiles. Il subsiste toutefois des pneumatiques non radiaux auquel se rapporte également l'invention. L'invention se rapporte encore à des pneumatiques partiellement radiaux, c'est-à-dire dont les éléments de renforcement de l'armature de carcasse sont radiaux sur au moins une partie de ladite armature de carcasse, par exemple dans la partie correspondant au sommet du pneumatique.

De nombreuses architectures d'armature de sommet ont été proposées, selon que le pneumatique sera destiné à la monte à l'avant de la moto ou à la monte à l'arrière. Une première structure consiste, pour ladite armature de sommet, à employer uniquement des câbles circonférentiels, et ladite structure est plus particulièrement employée pour la position arrière. Une deuxième structure, directement inspirée des structures couramment employées en pneumatiques pour véhicules de Tourisme, a été utilisée pour améliorer la résistance à l'usure, et consiste dans l'utilisation d'au moins deux couches de sommet de travail d'éléments de renforcement parallèles entre eux dans chaque couche mais croisés d'une couche à la suivante en faisant avec la direction circonférentielle des angles aigus, de tels pneumatiques étant plus particulièrement adaptés pour l'avant des motos. Les dites deux couches de sommet de travail peuvent être associées à au moins une couche d'éléments circonférentiels, généralement obtenus par enroulement hélicoïdal d'une bandelette d'au moins un élément de renforcement enrobé de caoutchouc.

Le choix des architectures de sommet des pneumatiques intervient directement sur certaines propriétés des pneumatiques telles que l'usure, l'endurance, l'adhérence ou bien encore le confort en roulage ou dans les cas notamment des motocyclettes la stabilité. Toutefois d'autres paramètres des pneumatiques tels que la nature des mélanges caoutchouteux constituant la bande de roulement interviennent également sur les propriétés dudit pneumatique. Le choix et la nature des mélanges caoutchouteux constituant la bande de roulement sont par exemple des paramètres essentiels concernant les propriétés d'usure. Le choix et la nature des mélanges caoutchouteux constituant la bande de roulement interviennent également sur les propriétés d'adhérence du pneumatique.

Il est par ailleurs connu de l'homme du métier que les propriétés physico-chimiques des mélanges caoutchouteux varient en fonction de la température et donc que la température a une influence sur les propriétés de la bande de roulement d'un pneumatique.

D'autre part, il est connu notamment du document EP 1 275 949 d'implanter un capteur sans fil dans les pneumatiques pour déterminer des forces ou contraintes s'exerçant au sein du pneumatique.

Le document EP 0 937 615 décrit quant à lui l'utilisation de capteurs sans fil à onde acoustique de surface intégrés dans un pneumatique notamment pour la mesure de l'adhérence d'un pneumatique. Un tel capteur présente l'avantage de pouvoir être interrogé à distance, par onde radiofréquence, sans-fil, sans qu'une source d'énergie proche soit nécessaire. L'énergie de l'onde radio d'interrogation envoyée par un dispositif d'interrogation à distance est suffisante pour que le capteur envoie une onde radio modifiée en réponse. Le document US 2002/0121132 décrit un pneumatique comportant un système de mesure de température.

L'invention a pour but de fournir un pneumatique permettant d'optimiser le fonctionnement du véhicule et plus précisément d'optimiser l'usage du véhicule en fournissant des informations relatives à l'adhérence, au comportement ou encore à l'usure du pneumatique.

Ce but a été atteint selon l'invention par un pneumatique comportant au moins une structure de renfort de type carcasse, formée d'éléments de renforcement, ancrée de chaque côté du pneumatique à un bourrelet dont la base est destinée à être montée sur un siège de jante, chaque bourrelet se prolongeant radialement vers l'extérieur par un flanc, les flancs rejoignant radialement vers l'extérieur une bande de roulement, la bande de roulement étant constituée pour partie de masses caoutchouteuses et comportant une surface d'usure limite, au moins un système de mesure de la température sans fil par technologie à onde acoustique de surface ou onde acoustique de volume étant noyé dans une zone d'une masse caoutchouteuse de la bande de roulement, ladite zone étant radialement extérieure à une surface radialement intérieure à la surface d'usure limite et la surface radialement intérieure à la surface d'usure limite étant distante, à l'état neuf, de la surface extérieure de la bande de roulement d'au plus 95 % de l'épaisseur de la bande de roulement et de préférence d'au plus 90%.

La surface d'usure limite d'un pneumatique est définie au sens de l'invention comme étant la surface extrapolée à partir des indicateurs d'usure présents sur le pneumatique.

La distance entre la surface radialement intérieure à la surface d'usure limite et la surface extérieure de la bande de roulement, et l'épaisseur de la bande de roulement sont mesurées selon la normale à la surface extérieure de la bande de roulement au point considéré.

Durant les essais, il a été mis en évidence que les systèmes de mesure de la température sans fil par technologie à onde acoustique de surface ou onde acoustique de volume du type SAW (Surface Acoustic Wave) ou BAW (Bulk Acoustic Wave) autorise une mesure précise de la température locale, c'est-à-dire une mesure de la température du mélange caoutchouteux directement dans leur voisinage.

Les capteurs de type SAW ou BAW présente également l'avantage comme évoqué précédemment de pouvoir être interrogé à distance par onde radio, sans qu'une source d'énergie proche leur soit nécessaire.

Un autre avantage de ces capteurs est notamment lié à leurs faibles dimensions qui autorisent leur mise en place dans les zones mentionnées précédemment sans perturber le fonctionnement intrinsèque du pneumatique.

L'implantation ou mise en place d'un système de mesure de la température sans fil par technologie à onde acoustique de surface ou onde acoustique de volume dans la zone telle que définie selon l'invention autorise ainsi une mesure locale de la température à une distance limitée de la surface de contact du pneumatique avec le sol et peut ainsi conférer une information quant aux propriétés de la bande de roulement du pneumatique et donc aux performances du pneumatiques telles que adhérence ou usure.

Les informations sur la température mesurées sont transmises par onde acoustique à un dispositif d'interrogation par exemple fixé sur le véhicule pour apporter des indications au conducteur du véhicule. Ces indications mises à disposition du conducteur peuvent lui permettre d'adapter la conduite du véhicule pour limiter l'échauffement constaté et ramener le pneumatique à des températures acceptables pour conserver ses performances.

Selon un premier mode de réalisation de l'invention, ladite zone est radialement extérieure à la surface d'usure limite. Selon ce premier mode de réalisation de l'invention, le système de mesure de la température sans fil par technologie à onde acoustique de surface ou onde acoustique de volume est mis en place au plus près de la surface de la bande de roulement. Un risque dans une telle réalisation est de ne pouvoir bénéficier de ce système que pendant une partie de la vie du pneumatique, le système de mesure pouvant être détruit au cours de l'usure du pneumatique.

Selon un second mode de réalisation préféré de l'invention, ladite zone est radialement intérieure à la surface d'usure limite. Selon ce second mode de réalisation de l'invention, le système de mesure est avantageusement opérationnel pendant toute la durée de vie ou d'utilisation du pneumatique quel que soit son stade d'usure.

Une variante de l'invention prévoit avantageusement qu'au moins un système de mesure est noyé dans une zone située dans le plan équatorial du pneumatique. Notamment dans le cas d'une motocyclette, Par exemple dans le cas d'une moto, il peut notamment être utile de faire une mesure de température au sommet du pneumatique, c'est-à-dire dans le plan équatorial du pneumatique. En effet cette zone de la bande de roulement peut par exemple être fortement sollicitée dans le cas de vitesses importantes en ligne droite pendant des temps importants.

Selon une autre variante de réalisation de l'invention, au moins un système de mesure est noyé dans une zone des extrémités axialement extérieures de la bande de roulement. Notamment dans le cas d'une moto dont la valeur de courbure est supérieure à 0.15, son utilisation en carrossage conduit à une zone de contact entre la bande de roulement et le sol correspondant aux parties axialement extérieures de ladite bande de roulement. La mise en place d'un système de mesure dans ces zones peut par exemple donner des indications au pilote quant à des limites à ne pas dépasser notamment au vu des performances d'adhérence.

Selon d'autres variantes de réalisation de l'invention, plusieurs systèmes de mesure de la température sans fil par technologie à onde acoustique de surface ou onde acoustique de volume sont noyés dans des zones de la bande de roulement telles que définies selon l'invention, lesdits systèmes étant avantageusement répartis selon la direction axiale de la bande de roulement. Cette répartition des différents systèmes de mesure dans la bande de roulement du pneumatique d'une moto permet d'obtenir des informations sur la température de la bande de roulement en différentes zones réparties sur sa largeur axiale par exemple en fonction de l'utilisation soit en ligne droite soit dans des courbes, le pneumatique étant alors utilisé en carrossage.

Avantageusement selon l'invention, lorsqu'au moins deux systèmes de mesure de la température sans fil par technologie à onde acoustique de surface ou onde acoustique de volume sont noyés dans différentes zones de masses caoutchouteuses du pneumatique, lesdits systèmes de mesure comportant des antennes polarisées linéairement, les directions de polarisation des antennes forment entre elles un angle compris entre 30 et 90°.

Les essais réalisés ont pu mettre en évidence que la réception du signal par le dispositif d'interrogation, par exemple associé au véhicule, nécessite d'être orienté selon une orientation correspondant à l'une ou l'autre des antennes des système de mesure pour recevoir leurs signaux respectifs. Une telle réalisation va ainsi permettre de recevoir les signaux de chacun des systèmes de mesure, à l'aide soit de deux dispositifs d'interrogation soit d'un seul dispositif d'interrogation prévu pour recevoir des signaux émis depuis des antennes dont les directions de polarisation sont différentes, en permettant ainsi d'identifier l'origine de l'antenne émettrice et donc du système de mesure associé. Une telle réalisation permet donc d'identifier la provenance du signal reçu et donc de connaître la température d'une zone définie dans le cas de deux systèmes de mesure placés dans des zones différentes. Il est connu de l'homme du métier qu'il n'est pas possible d'identifier un capteur du type SAW ou BAW de type résonateur à partir du signal qu'il émet.

En effet, dans le cas des capteurs SAW ou BAW de type résonateur, a contrario des capteurs SAW ou BAW de type ligne à retard, dès lors qu'au moins deux dispositifs de mesure de ce type, utilisant la même bande de fréquence, sont insérés dans un pneumatique, un dispositif d'interrogation associé n'est pas en mesure d'identifier la provenance des signaux qu'il reçoit et donc d'identifier le capteur avec lequel il communique. L'utilisation de plusieurs capteurs SAW ou BAW de type résonateur ne permet pas l'émission par chacun d'eux de signaux autorisant leur identification lorsqu'ils travaillent dans la même bande de fréquence.

De façon à faciliter la mise en place du ou des systèmes de mesure de la température, le pneumatique selon l'invention est avantageusement réalisé selon une technique de fabrication du type sur noyau dur ou forme rigide telle qu'évoquée précédemment.

Un tel pneumatique qui comme énoncé précédemment est avantageusement réalisé selon une technique du type sur noyau dur ou toroïdal autorise notamment la mise en place des systèmes de mesure de la température dans une position quasi-finale, une étape de conformation n'étant pas requise selon ce type de procédé, ladite position finale pouvant en outre être parfaitement identifiée. En effet, la fabrication du type sur noyau dur peut permettre d'insérer un système de mesure de la température selon une indexation prédéterminée.

La structure de renfort de type carcasse comporte avantageusement des éléments de renforcement faisant avec la direction circonférentielle un angle compris entre 65° et 90°.

Entre la structure de renfort de type carcasse et la bande de roulement, le pneumatique comporte encore une architecture d'armature de sommet.

Des architectures d'armature de sommet usuelle pour des pneumatiques moto varient, selon que le pneumatique sera destiné à la monte à l'avant de la moto ou à la monte à l'arrière. Une première structure consiste, pour ladite armature de sommet, à employer uniquement des câbles circonférentiels, et ladite structure est plus particulièrement employée pour la position arrière. Une deuxième structure, directement inspirée des structures couramment employées en pneumatiques pour véhicules de Tourisme, a été utilisée pour améliorer la résistance à l'usure, et consiste dans l'utilisation d'au moins deux couches de sommet d'éléments de renforcement parallèles entre eux dans chaque couche mais croisés d'une couche à la suivante en faisant avec la direction circonférentielle des angles aigus, de tels pneumatiques étant plus particulièrement adaptés pour l'avant des motos. Les dites deux couches de sommet peuvent être surmontées radialement d'au moins une couche d'éléments circonférentiels.

Selon une réalisation préférée de l'invention, la structure de renforcement de sommet du pneumatique comporte au moins deux couches d'éléments de renforcement telles que d'une couche à la suivante les éléments de renforcement forment entre eux des angles compris entre 20 et 160° et de préférence entre 40 et 100°.

Selon une réalisation préférée de l'invention, les éléments de renforcement des couches de travail sont en matériau textile.

De préférence également, les éléments de renforcement d'une couche d'éléments de renforcement circonférentiels sont métalliques et/ou textiles et/ou en verre. L'invention prévoit notamment l'utilisation d'éléments de renforcement de natures différentes dans une même couche d'éléments de renforcement circonférentiels.

De préférence encore, les éléments de renforcement de la couche d'éléments de renforcement circonférentiels présentent un module d'élasticité supérieur à 6000 N/mm².

L'invention propose encore une utilisation d'un système de mesure de la température sans fil par technologie à onde acoustique de surface ou onde acoustique de volume, noyé dans une zone d'une masse caoutchouteuse de la bande de roulement radialement extérieure à une surface radialement intérieure à la surface d'usure limite et la surface radialement intérieure à la surface d'usure limite étant distante, à l'état neuf, de la surface extérieure de la bande de roulement d'au plus 95 % de l'épaisseur de la bande de roulement et de préférence d'au plus 90 %.

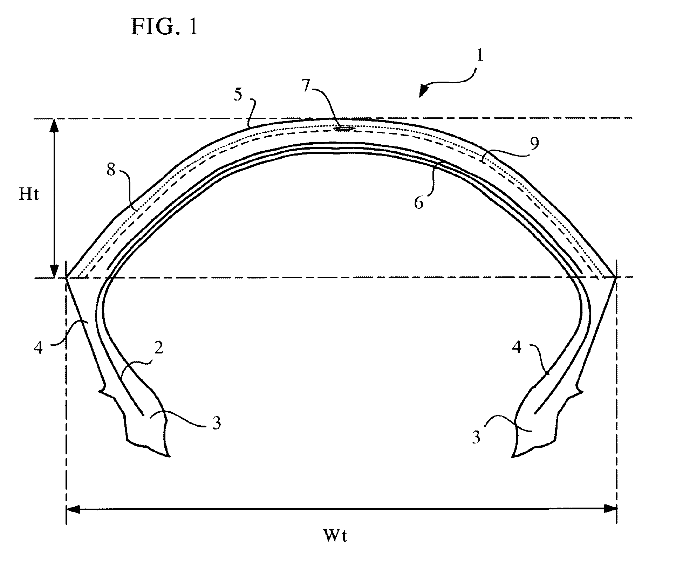

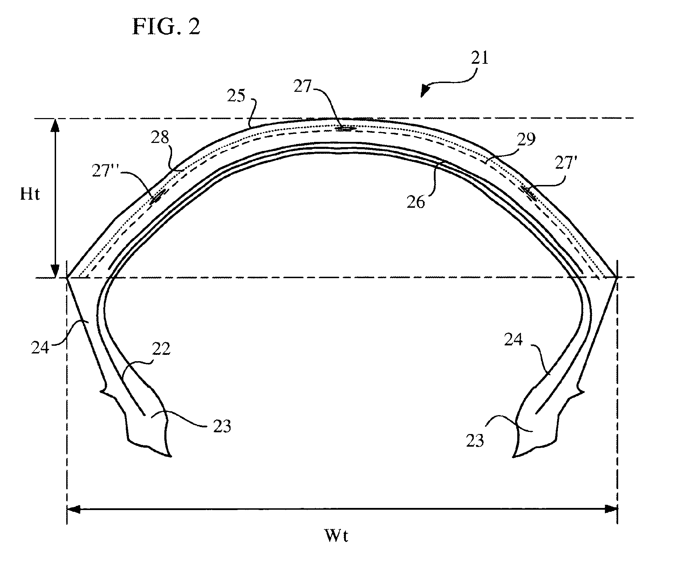

D'autres détails et caractéristiques avantageux de l'invention ressortiront ci-après de la description des exemples de réalisation de l'invention en référence aux figures 1 et 2 qui représentent :
- figure 1, une vue méridienne d'un schéma d'un pneumatique selon un premier mode de réalisation de l'invention,
- figure 2, une vue méridienne d'un schéma d'un pneumatique selon un deuxième mode de réalisation de l'invention,
- figure 3, une vue en plan et écorché de la bande de roulement d'un pneumatique.

Les figures 1 à 3 ne sont pas représentées à l'échelle pour en simplifier la compréhension.

La figure 1 représente un pneumatique 1 destiné à être utilisé sur un véhicule de type motocyclette comprenant une armature de carcasse constituée d'une seule couche 2 comprenant des éléments de renforcement de type textile. La couche 2 est constituée d'éléments de renforcement disposés radialement. Le positionnement radial des éléments de renforcement est défini par l'angle de pose desdits éléments de renforcement ; une disposition radiale correspond à un angle de pose desdits éléments par rapport à la direction longitudinale du pneumatique compris entre 65° et 90°.

Ladite couche de carcasse 2 est ancrée de chaque côté du pneumatique 1 dans un bourrelet 3 dont la base est destinée à être montée sur un siège de jante. Chaque bourrelet 3 est prolongé radialement vers l'extérieur par un flanc 4, ledit flanc 4 rejoignant radialement vers l'extérieur la bande de roulement 5. Le pneumatique 1 ainsi constitué présente une valeur de courbure supérieure à 0.15 et de préférence supérieure à 0.3. La valeur de courbure est définie par le rapport Ht/Wt, c'est-à-dire par le rapport de la hauteur de la bande de roulement sur la largeur maximale de la bande de roulement du pneumatique. La valeur de courbure sera avantageusement comprise entre 0.25 et 0.5 pour un pneumatique destiné à être monté à l'avant d'une motocyclette et elle sera avantageusement comprise entre 0.2 et 0.5 pour un pneumatique destiné à être monté à l'arrière.

Le pneumatique 1 comporte encore une armature de sommet 6, dont le détail n'est pas représenté sur la figure. L'armature de sommet peut comporter au moins une couche d'éléments de renforcement parallèles entre eux et faisant avec la direction circonférentielle des angles aigus et/ou une couche d'éléments de renforcement circonférentiels. Dans le cas de l'armature de sommet d'un pneumatique comportant au moins deux couches d'éléments de renforcement faisant avec la direction circonférentielle des angles aigus lesdits éléments de renforcement sont croisés d'une couche à la suivante en faisant entre eux des angles compris 40 et 100°.

Sur la figure 1, sont encore représentées la surface d'usure limite 8 et une surface 9, radialement intérieure à la surface d'usure limite 8 et distante, à l'état neuf, de la surface extérieure de la bande de roulement d'au plus 95 % de l'épaisseur de la bande de roulement.

Conformément à l'invention, le pneumatique comporte un système 7 de mesure de la température interne de la masse caoutchouteuse de la bande de roulement 5. Ce système de mesure 7 est un capteur de température sans fil, de type SAW (Surface Acoustic Wave). Ce type de capteur présente l'avantage, comme expliqué précédemment, de ne pas nécessiter d'alimentation associée ; il renseigne sur la température de la masse caoutchouteuse qui l'entoure en modifiant une onde qu'il reçoit et retransmet.

Dans le cas de la figure 1, le capteur 7 est placé dans le plan équatorial du pneumatique 1 et va permettre de renseigner sur la température locale de la masse caoutchouteuse, c'est-à-dire sur la température de la masse caoutchouteuse directement au contact du capteur. La mise en place du capteur dans cette zone permet au conducteur ou pilote de la moto de surveiller ou d'être informé sur la température de cette zone susceptible, notamment lors de roulage à grande vitesse en ligne droite, de subir des élévations de température pouvant modifier les performances de la bande de roulement.

Conformément à l'invention, le capteur est radialement à l'extérieur de la surface 9 et radialement à l'intérieur de la surface d'usure limite 8. Selon cette réalisation, conformément à l'invention, le capteur est positionné à proximité de la surface extérieure de la bande de roulement et dans une position permettant de garantir la pérennité de l'installation quel que soit le stade d'usure du pneumatique.

Un dispositif d'interrogation est avantageusement prévu sur le véhicule pour recevoir le signal transmis par le capteur. Ledit dispositif opérateur peut alors analyser le signal et communiquer les informations au pilote ou bien éventuellement agir directement sur le véhicule.

La figure 2 illustre un second mode de réalisation de l'invention selon lequel le pneumatique 21 comporte au moins trois capteurs 27, 27', 27" de mesure de la température, de type résonateur SAW, qui sont répartis sur la largeur axiale de la bande de roulement 25.

Le premier capteur 27 de mesure de la température, de type résonateur SAW, est mis en place, comme dans le cas de la figure 1, dans la zone du plan équatorial du pneumatique 21 et permet de donner des informations quant à la température interne de la partie de la bande de roulement 25 qui vient au contact du sol lorsque la moto suit une trajectoire rectiligne.

Les deux autres capteurs 27' et 27" de mesure de la température, de type résonateur SAW, sont mis en place dans les parties axialement extérieures de la bande de roulement 25 du pneumatique 21 et permettent chacun de donner des informations quant à la température interne d'une partie axialement extérieure de la bande de roulement 25 au contact du sol lorsque la moto suit une trajectoire en courbe, le pneumatique 21 étant alors utilisé en carrossage.

Dans le cas de la figure 2, les capteurs 27, 27', 27" de mesure de la température, de type résonateur SAW, sont mis en place dans le même plan radial. Il peut être préférable dans certaines situations d'incorporer les capteurs dans des plans radiaux différents pour éviter tout risque de perturbation.

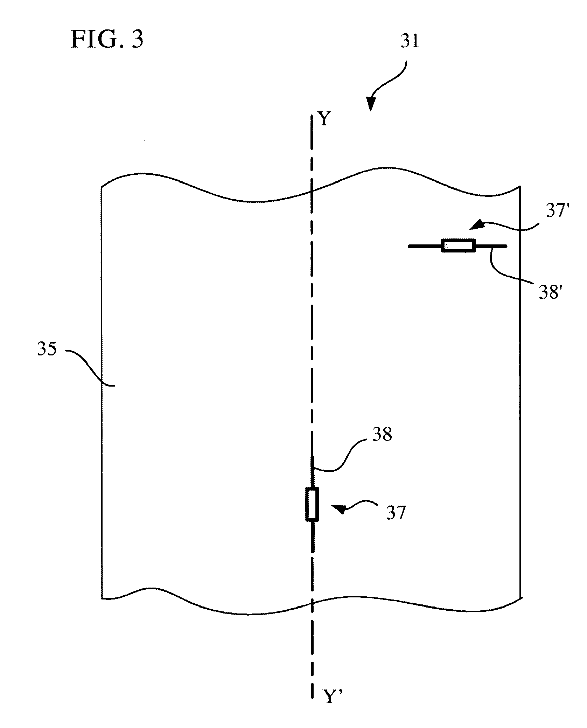

La figure 3 représente une vue en plan et en écorché de la bande de roulement 35 d'un pneumatique 31 de type motocyclette dans lequel au moins deux capteurs de mesure 37, 37' sont noyés dans des masses caoutchouteuses d'un pneumatique.

Un premier capteur 37 de mesure de la température, de type résonateur SAW, est mis en place dans la zone du plan équatorial YY' du pneumatique 31 et permet comme expliquer dans le cas des figures 1 et 2 de donner des informations quant à la température interne de la partie de la bande de roulement 35 au contact du sol lorsque la moto suit une trajectoire rectiligne.

Un deuxième capteur 37' de mesure de la température, de type résonateur SAW, est mis en place dans une partie axialement extérieure de la bande de roulement 35 du pneumatique 31 et permet de donner des informations quant à la température interne de ladite partie axialement extérieure de la bande de roulement 35 qui se trouve au contact du sol lorsque la moto suit une trajectoire en courbe, le pneumatique 31 étant alors utilisé en carrossage.

Les informations relatives à la température mesurées au sein de la bande de roulement par chacun des capteurs de type résonateur SAW sont transmises à un système d'interrogation, par exemple solidaire du véhicule. Comme il l'a déjà été dit précédemment les signaux émis par les capteurs de type résonateur SAW ou BAW ne permettent pas de sélectionner le capteur. Selon la représentation faite sur la figure 3, les directions de polarisation des antennes 38 et 38' de chacun des capteurs 37, 37' forment entres elles un angle sensiblement égal à 90°. Ces orientations différentes des antennes nécessitent de prévoir des systèmes complexes d'émission et de réception au niveau du dispositif prévu sur le véhicule pour permettre une communication avec chacun des capteurs résonateur SAW implantés dans le pneumatique. En effet, la réception des signaux de chacun des capteurs ne peut être assuré que par un couplage électromagnétique satisfaisant pour chacun de ces signaux réémis par chaque capteur avec un dispositif d'interrogation adapté.

## Revendications

1. - Pneumatique (1) comportant au moins une structure de renfort de type carcasse, formée d'éléments de renforcement, ancrée de chaque côté du pneumatique à un bourrelet (3) dont la base est destinée à être montée sur un siège de jante, chaque bourrelet se prolongeant radialement vers l'extérieur par un flanc (4), les flancs (4) rejoignant radialement vers l'extérieur une bande de roulement (5), la bande de roulement (5) étant constituée pour partie de masses caoutchouteuses et comportant une surface d'usure limite (8), **caractérisé en ce qu'**au moins un système (7) de mesure de la température sans fil par technologie à onde acoustique de surface ou onde acoustique de volume est noyé dans une zone d'une masse caoutchouteuse de la bande de roulement (5) et **en ce que** ladite zone est radialement extérieure à une surface (9) radialement intérieure à la surface d'usure limite (8) et **en ce que** la surface (9) radialement intérieure à la surface d'usure limite (8) est distante, à l'état neuf, de la surface extérieure de la bande de roulement d'au plus 95 % de l'épaisseur de la bande de roulement.

2. - Pneumatique selon la revendication 1, **caractérisé en ce que** ladite zone est radialement extérieure à la surface d'usure limite (8).

3. - Pneumatique selon la revendication 1, **caractérisé en ce que** ladite zone est radialement intérieure à la surface d'usure limite (8).

4. - Pneumatique selon l'une des revendications 1 à 3, **caractérisé en ce qu'**au moins un système (27) de mesure est noyé dans une zone située dans le plan équatorial du pneumatique.

5. - Pneumatique selon l'une des revendications 1 à 4, **caractérisé en ce qu'**au moins un système (27', 27") de mesure est noyé dans une zone des extrémités axialement extérieures de la bande de roulement.

6. - Pneumatique selon l'une des revendications précédentes, au moins deux systèmes (37, 37') de mesure de la température sans fil par technologie à onde acoustique de surface ou onde acoustique de volume comportant des antennes polarisées linéairement et étant noyés dans différentes zones de masses caoutchouteuses du pneumatique, **caractérisé en ce que** les directions de polarisation des antennes forment entre elles un angle compris entre 30 et 90°.

7. - Utilisation d'un pneumatique tel que décrit selon l'une des revendications 1 à 6 pour un véhicule motorisé à deux roues tel qu'une motocyclette.

8. - Utilisation d'un système (7) de mesure de la température sans fil par technologie à onde acoustique de surface ou onde acoustique de volume, noyé dans une zone d'une masse caoutchouteuse de la bande de roulement radialement extérieure à une surface (9) radialement intérieure à la surface d'usure limite (8) et la surface (9) radialement intérieure à la surface d'usure limite (8) etant distante, à l'état neuf, de la surface extérieure de la bande de roulement (5) d'au plus 95 % de l'épaisseur de la bande de roulement (5).

9. - Utilisation d'un système de mesure de la température selon la revendication 8, **caractérisé en ce qu'**au moins un système (7) de mesure est noyé une zone située dans le plan équatorial du pneumatique.

10. - Utilisation d'un système de mesure de la température selon l'une des revendications 8 ou 9, **caractérisé en ce qu'**au moins un système (7) de mesure est noyé dans une zone des extrémités axialement extérieures de la bande de roulement (5).

## Claims

1. A tire (1) comprising at least one carcass reinforcement structure formed from reinforcing elements and anchored on each side of the tire to a bead (3), the base of which is intended to be mounted on a rim seat, each bead being radially outwardly extended by a sidewall (4), the sidewalls (4) radially outwardly joining a tread (5), the tread (5) consisting partly of rubber compounds and including a wear limit surface (8), **characterized in that** at least one wireless temperature measurement system (7) based on surface acoustic wave or bulk acoustic wave technology is embedded in a region of a rubber compound of the tread (5) and **in that** said region is radially to the outside of a surface (9) radially to the inside of the wear limit surface (8) and **in that** the surface (9) radially to the inside of the wear limit surface (8) is, in the unworn state, at a distance from the outer surface of the tread of at most 95% of the thickness of the tread.

2. The tire as claimed in claim 1, **characterized in that** said region is radially to the outside of the wear limit surface (8).

3. The tire as claimed in claim 1, **characterized in that** said region is radially to the inside of the wear limit surface (8).

4. The tire as claimed in one of claims 1 to 3, **characterized in that** at least one measurement system (27)is embedded in a region lying in the equatorial plane of the tire.

5. The tire as claimed in one of claims 1 to 4, **characterized in that** at least one measurement system (27', 27") is embedded in a region of the axially outer ends of the tread.

6. The tire as claimed in one of the preceding claims, at least two wireless temperature measurement systems (37, 37') based on surface acoustic wave or bulk acoustic wave technology comprising linearly polarized antennas and being embedded in various rubber compound regions of the tire, **characterized in that** the polarization directions of the antennas form between them an angle between 30 and 90°.

7. The use of a tire as described in one of claims 1 to 6 for a two-wheeled motor vehicle such as a motorcycle.

8. The use of a wireless temperature measurement system (7) based on surface acoustic wave or bulk acoustic wave technology, embedded in a region of a rubber compound of the tread radially to the outside of a surface (9) radially to the inside of the wear limit surface (8), and the surface (9) radially to the inside of the wear limit surface (8) being, in the unworn state, at a distance from the outer surface of the tread (5) of at most 95% of the thickness of the tread (5).

9. The use of a temperature measurement system as claimed in claim 8, **characterized in that** at least one measurement system (7) is embedded in a region lying in the equatorial plane of the tire.

10. The use of a temperature measurement system as claimed in either of claims 8 and 9, **characterized in that** at least one measurement system (7) is embedded in a region of the axially outer ends of the tread (5).

## Patentansprüche

1. Reifen (1), umfassend mindestens eine Verstärkungsstruktur vom Typ Unterbau, die von Verstärkungselementen gebildet und auf jeder Seite des Reifens an einem Wulst (3) verankert ist, dessen Basis dazu bestimmt ist, auf einem Felgensitz montiert zu werden, wobei jeder Wulst radial nach außen durch eine Seite (4) verlängert ist, wobei die Seiten (4) radial nach außen an eine Lauffläche (5) angrenzen, wobei die Lauffläche (5) zum Teil von Kautschukmassen gebildet ist und eine Grenzverschleißfläche (8) umfasst, **dadurch gekennzeichnet, dass** mindestens ein drahtloses Temperaturmesssystem (7) durch eine Technologie mit akustischer Bodenwelle oder mit akustischer Volumenwelle in eine Zone einer Kautschukmasse der Lauffläche (5) eingefügt ist, und dass die Zone radial außerhalb zu einer radial inneren Fläche (9) zur Grenzverschleißfläche (8) ist, und dass die radial innere Fläche (9) zur Grenzverschleißfläche (8) im Neuzustand von der Außenfläche der Lauffläche um höchstens 95 % der Dicke der Lauffläche beabstandet ist.

2. Reifen nach Anspruch 1, **dadurch gekennzeichnet, dass** die Zone radial außerhalb zur Grenzverschleißfläche (8) ist.

3. Reifen nach Anspruch 1, **dadurch gekennzeichnet, dass** die Zone radial innerhalb zur Grenzverschleißfläche (8) ist.

4. Reifen nach einem der Ansprüche 1 bis 3, **dadurch gekennzeichnet, dass** mindestens ein Messsystem (27) in eine Zone eingefügt ist, die sich in der Äquatorialebene des Reifens befindet.

5. Reifen nach einem der Ansprüche 1 bis 4, **dadurch gekennzeichnet, dass** mindestens ein Messsystem (27', 27") in eine Zone der axial äußeren Enden der Lauffläche eingefügt ist.

6. Reifen nach einem der vorhergehenden Ansprüche, wobei mindestens zwei drahtlose Temperaturmesssysteme (37, 37') durch eine Technologie mit akustischer Bodenwelle oder akustischer Volumenwelle linear polarisierte Antennen umfassen und in verschiedene Zonen von Kautschukmassen des Reifens eingefügt sind, **dadurch gekennzeichnet, dass** die Polarisationsrichtungen der Antennen zwischen sich einen Winkel zwischen 30 und 90° bilden.

7. Verwendung eines Reifens, wie nach einem der Ansprüche 1 bis 6 beschrieben, für ein motorisiertes zweirädriges Fahrzeug, wie beispielsweise ein Motorrad.

8. Verwendung eines drahtlosen Temperaturmesssystems (7) durch eine Technologie mit akustischer Bodenwelle oder akustischer Volumenwelle, das in eine Zone einer Kautschukmasse der Lauffläche radial außerhalb zur radial inneren Fläche (9) zur Grenzverschleißfläche (8) eingefügt ist, wobei die radial innere Fläche (9) zur Grenzverschleißfläche (8) im Neuzustand von der Außenfläche der Lauffläche (5) um höchstens 95 % de Dicke der Lauffläche (5) beabstandet ist.

9. Verwendung eines Temperaturmesssystems nach Anspruch 8, **dadurch gekennzeichnet, dass** mindestens ein Messsystem (7) in eine Zone eingefügt ist, die sich in der Äquatorialebene des Reifens befindet.

10. Verwendung eines Temperaturmesssystems nach einem der Ansprüche 8 oder 9, **dadurch gekennzeichnet, dass** mindestens ein Messsystem (7) in eine Zone der axial äußeren Enden der Lauffläche (5) eingefügt ist.
